(19) Europäisches Patentamt
European Patent Office
Office européen des brevets

(11) EP 2 024 068 B1

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: **07724823.5**

(22) Anmeldetag: **03.05.2007**

(51) Int Cl.:
***B01D 67/00*** (2006.01) ***B01D 69/02*** (2006.01)
***B01D 69/08*** (2006.01) ***B01D 71/68*** (2006.01)

(86) Internationale Anmeldenummer:
**PCT/EP2007/003897**

(87) Internationale Veröffentlichungsnummer:
**WO 2007/128488 (15.11.2007 Gazette 2007/46)**

(54) **ULTRAFILTRATIONSMEMBRAN**
ULTRAFILTRATION MEMBRANE
MEMBRANE D'ULTRAFILTRATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.05.2006 DE 102006021217**

(43) Veröffentlichungstag der Anmeldung:
**18.02.2009 Patentblatt 2009/08**

(73) Patentinhaber: **Membrana GmbH**
**42289 Wuppertal (DE)**

(72) Erfinder:
- **ANSORGE, Wolfgang**
**45133 Essen (DE)**
- **SPINDLER, Ernst**
**63924 Kleinheubach (DE)**
- **KRÜGER, Richard**
**42349 Wuppertal (DE)**
- **RÜTERING, Martin**
**42329 Wuppertal (DE)**
- **SCHUSTER, Oliver**
**58285 Gevelsberg (DE)**

(74) Vertreter: **Schröder, Richard**
**CPW GmbH**
**Kasinostrasse 19-21**
**42103 Wuppertal (DE)**

(56) Entgegenhaltungen:
**WO-A-2004/056460 DE-C1- 19 518 624**

EP 2 024 068 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine hydrophile, integral asymmetrische semipermeable Hohlfasermembran zur Ultrafiltration aus einem hydrophoben aromatischen Sulfonpolymer sowie mindestens einem hydrophilen Polymer sowie ein Verfahren zu ihrer Herstellung.

Polymermembranen werden in verschiedensten Bereichen industrieller, pharmazeutischer oder medizinischer Anwendungen zur Präzisionsfiltration eingesetzt. In diesen Anwendungen gewinnen Membrantrennprozesse zunehmend an Bedeutung, da diese Prozesse den Vorteil bieten, dass die zu trennenden Stoffe thermisch nicht belastet oder gar geschädigt werden. Ultrafiltrationsmembranen lassen sich zur Entfernung bzw. Abtrennung von Makromolekülen einsetzen. Zahlreiche weitere Anwendungen von Membrantrennprozessen sind aus der Getränkeindustrie, der Biotechnologie, der Wasseraufbereitung oder der Abwassertechnologie bekannt. Derartige Membranen werden im allgemeinen nach ihrem Rückhaltevermögen klassifiziert, d.h. nach ihrem Vermögen, Teilchen oder Moleküle bestimmter Größe zurückzuhalten, oder hinsichtlich der Größe der effektiven Pore, also der Größe der Poren, die das Trennverhalten bestimmen. Hierbei decken Ultrafiltrationsmembranen den Bereich der Größe der das Trennverhalten bestimmenden Poren zwischen etwa 0,01 bis ca. 0,1 μm ab, womit sich Teilchen oder Moleküle einer Größe im Bereich größer 20 000 bzw. größer ca. 200 000 Dalton zurückhalten lassen.

Eine weitere Unterscheidung der Membranen lässt sich im Hinblick auf die Porenstruktur der Membranen vornehmen, d.h. im Hinblick auf die Größe der Poren über der Membranwand. Hier kann zwischen symmetrischen Membranen, d.h. Membranen, bei denen die Porengröße auf beiden Seiten der Membranwand i.w. gleich ist, und asymmetrischen Membranen unterschieden werden, bei denen die Porengröße auf beiden Seiten der Membran unterschiedlich ist. Asymmetrische Membranen weisen in der Regel eine Trennschicht auf, in der die Porengröße minimal ist und die die Trenncharakteristik der Membran bestimmt, und an die Trennschicht angrenzend eine Stützschicht mit gröberen Poren, die für die mechanische Stabilität der Membran verantwortlich zeichnet. Unter einer integral asymmetrischen Membran wird dabei eine Membran verstanden, die zumindest eine Trennschicht und eine Stützschicht aufeist, wobei Trennschicht und Stützschicht aus dem gleichen Material bestehen und zusammen bei der Membranherstellung ausgebildet werden. Hierdurch sind beide Schichten als integrale Einheit miteinander verbunden. Beim Übergang von der Trennschicht zur Stützschicht erfolgt allein eine Änderung in Bezug auf die Membranstruktur. Integral asymmetrische Membranen und Verfahren zu ihrer Herstellung sind z.B. in der EP 0361 085 B1 beschrieben.

Im Gegensatz zu integral asymmetrischen Membranen zeigen Composit-Membranen einen mehrschichtigen Aufbau, der dadurch resultiert, dass auf einer bereits fertig hergestellten (mikro-)porösen Stützschicht oder Stützmembran durch einen nachträglichen, d.h. separaten Verfahrensschritt, wie z.B. durch Beschichten mit einem filmbildenden Polymer oder durch Pfropfen mit einem dieses Polymer bildenden Monomer, eine Trennschicht aufgebracht wird. Dies hat zur Folge, dass die Materialien, die die Stützschicht und die Trennschicht aufbauen, bei Composit-Membranen auch unterschiedliche Eigenschaften aufweisen. Am Übergang von der Trennschicht zur Stützschicht besteht bei Composit-Membranen also eine Inhomogenität hinsichtlich des die Membran aufbauenden Materials.

Um Ultrafiltrationsanwendungen wirtschaftlich betreiben zu können, werden Membranen benötigt, die hohe Filtrationsraten aufweisen. Dabei werden zur Erzeugung der hohen Filtrationsleistungen die Membranen in der Regel mit hohen Drücken beaufschlagt. Ein wesentliches Kriterium für die Beurteilung der Membranen ist daher deren Permeabilität bzw. deren Transmembranfluss, wobei die Permeabilität definiert ist als das Fluidvolumen, das pro Flächeneinheit der Membran, sowie pro Zeiteinheit und Druck durch die Membran hindurchtritt. Daneben ist die mechanische Belastbarkeit oder Stabilität der Hohlfasermembran eine wichtige Beurteilungsgröße.

Vielfach werden für Anwendungen im Ultrafiltrationsbereich Membranen aus Sulfonpolymeren wie z.B. Polysulfon oder Polyethersulfon verwendet, nicht zuletzt wegen ihrer hohen chemischen Stabilität unter anderem gegenüber Säuren oder Alkali, ihrer Temperaturstabilität oder der Sterilisierbarkeit der daraus hergestellten Membranen.

Die US-A- 5 928 774 offenbart asymmetrische, aus Sulfonpolymeren bestehende Ultrafiltrationsmembranen in Form von Flachfolien. Die Membranen der US-A- 5 928 774 weisen eine ausgeprägte Asymmetrie auf und besitzen an ihrer einen Oberfläche eine Trennschicht in Form einer Haut und daran angrenzend eine Stützschicht, deren Porenstruktur frei von Kavernen, auch Fingerporen oder Macrovoids genannt, ist und deren Poren in der Größe von der Haut ausgehend bis zur zweiten Oberfläche allmählich größer werden. Mit ihrer ausgeprägten Asymmetrie sind die Membranen der US-A-5 928 774 in Richtung hoher Transmembranflüsse und hoher Schmutzbeladbarkeit in der Anwendung optimiert. Ähnliche, aus einem Polyethersulfon bestehende Flachmembranen mit ausgeprägter Asymmetrie werden auch in der US-A-5 886 059 beschrieben.

Da die in den zuvor genannten Schriften beschriebenen semipermeablen Membranen aus hydrophoben Sulfonpolymeren bestehen, weisen sie eine schlechte Wasserbenetzbarkeit auf, weshalb ihr Einsatz für die Filtration wässriger Medien sehr eingeschränkt ist. Darüber hinaus ist bekannt, dass hydrophobe Membranen ein starkes, unspezifisches Adsorptionsvermögen z.B. gegenüber Proteinen besitzen, woraus im Einsatz häufig eine schnelle Belegung der Membranoberfläche mit vorzugsweise höhermolekularen Bestandteilen der zu filtrierenden Flüssigkeit und in der Folge eine Verschlechterung der Permeabilität resultiert. Zur Verbesserung der Wasserbenetzbarkeit und damit zur Verbesserung der Permeabilität gegenüber wässrigen Medien sind daher verschiedene Ansätze unternommen worden, auf Sulfonpolymeren basierende Membranen hydrophil zu machen, wobei gleichzeitig die Neigung zur Adsorption von Proteinen verringert wird. Gemäß einem dieser Ansätze werden den Sulfonpolymeren hydrophile Polymere wie z.B. Polyvinylpyrrolidon beigemischt.

Die EP-A-568 045 betrifft hydrophile Hohlfasermembranen auf Basis von Polysulfon mit einer asymmetrischen Struktur, die zur Gewährleistung der hydrophilen Eigenschaften ein Polyglykol und ein Polymer auf Vinylpyrrolidonbasis enthalten. Die Hohlfasermembranen der EP-A-568 045 weisen an ihrer dem Lumen zugewandten Seite eine 0,1 bis 3 μm dicke Trennschicht mit schlitzförmigen, 0,001 bis 0,05 breiten Poren auf der inneren Oberfläche auf. An die Trennschicht schließt sich eine Stützschicht mit netzwerk- bzw. schwammartiger Struktur und Poren einer mittleren Größe von 1 bis 5 μm an. An der äußeren Oberfläche befindet sich eine Schicht mit netzwerk- bzw. schwammartiger Struktur, die dichter als die Stützschicht ist.

Die Trenngrenzen der Membranen der EP-A-568 045 lassen sich dem Ultrafiltrationsbereich zuordnen, wenngleich die Membranen für die Blutbehandlung optimiert sind. Für die Hohlfasermembranen in den Beispielen der EP-A-568 045 werden Permeabilitäten für Wasser in der Größenordnung bis ca. 0,7 ml/cm$^2$·min·bar angegebenen. Dabei sind diese Membranen mit einer Wandstärke von 40 μm aber relativ dünnwandig und damit wegen der unzureichenden Druck- und Bruchstabilität für Ultrafiltrationsanwendungen nicht geeignet.

Die EP-A-828 553 offenbart Hohlfasermembranen unter anderem aus Polyethersulfon vornehmlich für den Nanofiltrationsbereich und den unteren Ultrafiltrationsbereich, d.h. für Anwendungen insbesondere für die Hemodialyse, Hemodiafiltration und die Hemofiltration. Die Hohlfasermembranen der EP-A-828 553 haben einen dreischichtigen Aufbau mit einer dünnen, offene Poren aufweisenden Trennschicht an der Lumenseite der Hohlfasermembran, einer sich daran anschließenden grobporigen, schwammartigen oder netzwerkartigen Stützschicht mit homogener Struktur ohne Fingerporen und einer sich daran anschließenden äußeren Schicht, deren Porengröße größer als die der Trennschicht, jedoch kleiner als die der Stützschicht ist. Bei den in den Beispielen der EP-A-828 553 offenbarten Membranen handelt es sich im wesentlichen um Dialysemembranen, deren Permeabilitäten bzw. Transmembranflüsse zu gering und/oder deren mechanische Belastbarkeit aufgrund der geringen Membrandicken für Ultrafiltrationsanwendungen nicht ausreicht.

Der vorliegenden Erfindung liegt daher die Aufgabe zu Grunde, eine verbesserte Hohlfasermembran zur Ultrafiltration zur Verfügung zu stellen, die eine hohe Permeabilität bei gleichzeitig hoher mechanischer Stabilität aufweist. Es ist des Weiteren Aufgabe der vorliegenden Erfindung, ein Verfahren zur Herstellung derartiger Hohlfasermembranen bereitzustellen.

Die erfindungsgemäße Aufgabe wird gelöst durch eine hydrophile integral asymmetrische semipermeable Hohlfasermembran zur Ultrafiltration aus einem hydrophoben aromatischen Sulfonpolymer sowie mindestens einem hydrophilen Polymer, welche eine ihrem Lumen zugewandte innere Oberfläche und eine nach außen gerichtete äußere Oberfläche und eine dazwischenliegende Wand mit einer Wanddicke aufweist, wobei die Hohlfasermembran in ihrer Wand an der inneren Oberfläche eine offenporige Trennschicht, an die Trennschicht anschließend in Richtung auf die äußere Oberfläche eine Stützschicht mit asymmetrischer, schwammartiger Porenstruktur ohne Fingerporen und an die Stützschicht angrenzend in Richtung auf die äußere Oberfläche eine Außenschicht aufweist, wobei die erfindungsgemäße Hohlfasermembran dadurch gekennzeichnet ist, dass die Trennschicht eine Trenngrenze im Bereich zwischen 20.000 und 200.000 Dalton sowie eine Dicke von maximal 10% der Wanddicke besitzt und die Porenstruktur im Bereich der Trennschicht im wesentlichen isotrop ist, die Größe der Poren in der Stützschicht ausgehend von der Trennschicht zunächst bis zu einer Zone mit maximaler Porengröße zunimmt und im Anschluss an diese Zone in Richtung auf die Außenschicht abnimmt, die Außenschicht eine Dicke von 10 bis 30% der Wanddicke aufweist, die Porenstruktur im Bereich der Außenschicht im wesentlichen isotrop ist und die mittlere Größe der Poren in der Außenschicht größer als die mittlere Porengröße in der Trennschicht, jedoch kleiner als die mittlere Porengröße in der Stützschicht ist, die Wanddicke im Bereich von 100 bis 450 μm liegt und dass sie einen Transmembranfluss für Wasser von mindestens 0,5 ml/(cm$^2$·min·bar) und eine Bruchfestigkeit $\sigma_B$, d.h. eine auf die Querschnittsfläche $A_Q$ ihrer Wand bezogene Bruchkraft BK von mindestens 300 cN/mm$^2$aufweist.

Durch die erfindungsgemäße Merkmalskombination wird überraschenderweise eine Hohlfasermembran erhalten, die sowohl eine hohe Permeabilität für Wasser, d.h. einen hohen Transmembranfluss für Wasser, als auch eine hohe mechanische Belastbarkeit aufweist. Dabei wird zur Beurteilung der mechanischen Belastbarkeit oder Stabilität die Bruchkraft der Hohlfasermembran herangezogen. Weitere Beurteilungskriterien sind die Bruchfestigkeit der Hohlfasermembran sowie ihr Berstdruck bei Innendruckbelastung.

Dass die erfindungsgemäßen Hohlfasermembranen eine hohe Permeabilität für Wasser und gleichzeitig eine hohe mechanische Belastbarkeit besitzen, überrascht um so mehr, als diese Eigenschaften gegensätzliche Tendenzen aufweisen. So nimmt die Permeabilität von Membranen mit geringer werdender Wandstärke der Membranen und/oder einer grobporigeren Struktur des Porensystems der Membran zu. Geringere Wandstärken und grobporigere Strukturen haben aber zur Folge, dass die mechanische Stabilität der Membranen abnimmt. Umgekehrt erhöht sich die Festigkeit einer Membran, je dichter das Porengefüge bzw. die Porenstruktur, d.h. je kleiner die Poren der Membran sind. Ebenso steigt die mechanische Stabilität einer Membran mit zunehmender Wanddicke. Diese beiden Faktoren bewirken jedoch

eine Reduzierung der Membranpermeabiltät.

Die erfindungsgemäße Aufgabe wird des Weiteren gelöst durch ein Verfahren zur Herstellung einer solchen Hohlfasermembran, wobei das Verfahren die Schritte umfasst:

a. Herstellung einer homogenen Spinnlösung aus einer Polymerkomponente und einem Lösemittelsystem, wobei die Polymerkomponente 17 bis 27 Gew.-%, bezogen auf das Gewicht der Lösung, eines hydrophoben aromatischen Sulfonpolymers sowie 10 bis 30 Gew.-%, bezogen auf das Gewicht der Lösung, mindestens eines hydrophilen Polymers umfasst und das Lösemittelsystem aus 5 bis 80 Gew.-%, bezogen auf das Gewicht des Lösemittelsystems, eines Lösemittels für die Polymerkomponente, 0 bis 80 Gew.-%, bezogen auf das Gewicht des Lösemittelsystems, latentem Lösemittel für die Polymerkomponente sowie 0 bis 70 Gew.-%, bezogen auf das Gewicht des Lösemittelsystems, Nichtlöser für die Polymerkomponente besteht,
b. Extrusion der homogenen Spinnlösung durch den Ringspalt einer Hohlfadendüse zu einem Hohlfaden,
c. Extrusion einer Innenfüllung durch die zentrale Öffnung der Hohlfadendüse, wobei die Innenfüllung aus einer Mischung eines Lösemittels und eines Nichtlösers für das Sulfonpolymer besteht,
d. Inkontaktbringen der Innenfüllung mit der Innenseite des Hohlfadens zur Auslösung der Koagulation im Inneren des Hohlfadens und zur Ausbildung einer Trennschicht an der Innenseite des Hohlfadens und der Membranstruktur,
e. Hindurchleiten des Hohlfadens nach Austritt aus der Hohlfadendüse während einer Zeit von 0,5 bis 10 s durch eine Klimazone, enthaltend Luft mit einer relativen Luftfeuchtigkeit von 40 bis 95 % und einer Temperatur von 50 bis 70°C, anschließend
f. Hindurchleiten des Hohlfadens durch ein auf 50 bis 80 °C temperiertes wässriges Koagulationsmedium, um die Ausbildung der Membranstruktur zu vervollständigen und um die Membranstruktur zu fixieren,
g. Extraktion der so gebildeten Hohlfasermembran zur Entfernung des Lösemittelsystems sowie löslicher Substanzen,
h. Trocknung der Hohlfasermembran.

Durch die spezielle Architektur bzw. Porenstruktur der erfindungsgemäßen Membran, d.h. insbesondere durch die grobporige, schwammartige Stützschicht, die sich über mindestens 60 % der Wanddicke erstreckt, und die sich daran anschließende, 10 bis 30% der Wanddicke ausmachende Außenschicht mit im wesentlichen isotroper Porenstruktur und einer mittleren Porengröße, die größer ist als die mittlere Porengröße in der Trennschicht, jedoch kleiner als die mittlere Porengröße in der Stützschicht, wird sowohl eine hohe Permeabilität als auch eine hohe mechanische Belastbarkeit erhalten. Bei Dicken der Außenschicht von weniger als 10% der Wanddicke wird zu eine unerwünschte Abnahme der mechanischen Belastbarkeit beobachtet. Dicken der Außenschicht von mehr als 30% der Wanddicke resultieren zwar in guten mechanischen Eigenschaften, jedoch zeigt sich eine deutliche Abnahme der Permeabilitäten. Bevorzugt erstreckt sich die Außenschicht über höchstens 25% der Wanddicke und besonders bevorzugt über 15 bis 25% der Wanddicke.

Bei Betrachtung der äußeren Oberfläche der erfindungsgemäßen Hohlfasermembran ist es möglich, dass die Porengröße auf der Oberfläche kleiner erscheint als in der darunter liegenden isotropen Außenschicht. In diesen Fällen weist die erfindungsgemäße Membran an dieser Oberfläche eine maximal 5 μm dicke Haut auf oder besitzt zwischen der Außenschicht und der äußeren Oberfläche der Membran eine dünne, bis ca. 5 μm dicke Schicht, innerhalb derer die Porengröße von der mittleren Porengröße in der Außenschicht auf die Porengröße in der Oberfläche abnimmt.

Dabei resultiert die Trennleistung der erfindungsgemäßen Membran aus der Größe der Poren in der Trennschicht. Die Permeabilität der Membran wird im Wesentlichen durch die Trennschicht sowie die Außenschicht bestimmt, wobei durch Einstellung der Porengröße in der Außenschicht wesentlicher Einfluss auf die Permeabilität genommen werden kann. Durch die Anwesenheit der Trennschicht und der Außenschicht wird bei der erfindungsgemäßen Hohlfasermembran gleichzeitig erreicht, dass Trenncharakteristik und Permeabilität im wesentlichen voneinander entkoppelt sind, so dass eine Erhöhung der Permeabilität nicht gleichzeitig eine Verschiebung der Trenngrenze zu größeren Molekülen oder Teilchen nach sich zieht. Umgekehrt wirkt sich eine Verschiebung der Trenngrenze zu geringeren Molekül- oder Teilchengrößen nicht wesentlich in einer Verringerung der Permeabilität aus.

Die Stützschicht weist einen hydraulischen Widerstand bei Durchströmung mit Wasser auf, der demjenigen der Trennschicht und der Außenschicht deutlich untergeordnet ist und umso geringer ist, je größer die Poren in der Stützschicht sind. Die mechanische Belastbarkeit der erfindungsgemäßen Membran, d.h. die Bruchfestigkeit bzw. die Druckstabilität, ergibt sich im wesentlichen aus den Beiträgen der Stützschicht sowie der Außenschicht. Den wesentlichen Beitrag zur mechanischen Stabilität der erfindungsgemäßen Hohlfasermembran liefert jedoch die 10 bis 30% der Wanddicke ausmachende Außenschicht mit im wesentlichen isotroper Porenstruktur, deren mittlere Porengröße größer ist als die mittlere Porengröße in der Trennschicht, jedoch kleiner als die mittlere Porengröße in der Stützschicht.

Im Hinblick auf die Porenstruktur der erfindungsgemäßen Hohlfasermembranen sowie die damit in Verbindung stehenden Membraneigenschaften ist es von Vorteil, wenn die Zone mit maximaler Porengröße von der inneren Oberfläche einen Abstand im Bereich zwischen 15 und 40% der Wanddicke aufweist. Die Größe der maximalen Poren in

der Zone mit maximaler Porengröße liegt vorzugsweise im Bereich zwischen 5 und 15 μm. Hierdurch wird eine relativ grobporige Struktur in der Stützschicht und daraus folgend ein weitgehend vernachlässigbarer Beitrag der Stützschicht zum Durchflusswiderstand der Membranwand erreicht. Gleichzeitig leistet die Stützschicht jedoch wegen ihrer homogenen Porenstruktur, d.h. wegen ihrer schwammartigen bzw. netzwerkartigen Porenstruktur ohne Fingerporen - in der Literatur häufig auch als Kavernen oder Macrovoids bezeichnet - weiterhin einen nennenswerten Beitrag zur mechanischen Stabilität der erfindungsgemäßen Hohlfasermembranen.

Hierbei wird im Rahmen der vorliegenden Erfindung unter einem im wesentlichen isotropen Bereich ein Bereich der Membranwand mit einer im wesentlichen konstanten Porengröße verstanden. Der isotrope Bereich kann auch als ein Bereich mit sich durch die Membranwand erstreckenden Strömungskanälen mit im Wesentlichen konstantem mittleren Durchmesser angesehen werden. Wie bei jeder Membran variiert auch bei der erfindungsgemäßen Hohlfasermembran die aktuelle Porengröße etwas, d.h. sie weist eine gewisse Porengrößenverteilung auf, wenn auch die Porengrößenverteilung visuell isotrop erscheint. Daher sind von der Erfindung auch Ausführungen des im wesentlichen isotropen Bereichs umfasst, bei denen sich die Porengröße maximal um ca. 20-30% ändert.

Die Beurteilung der Porenstruktur sowie der Porengrößen über der Wanddicke kann mittels üblicher Untersuchungsmethoden wie anhand von Raster- oder Transmissionselektronenmikroskopaufnahmen mit einer Vergrößerung von 400:1, vorzugsweise mit einer Vergrößerung von 750:1 mit hinreichender Qualität beurteilt werden.

Erfindungsgemäß besitzt auch die Trennschicht eine im Wesentlichen isotrope Porenstruktur. Damit unterscheidet sich die Porenstruktur der erfindungsgemäßen Membran von der Porenstruktur der in der US-A-4 933 081 oder der US-A-5 049 276 offenbarten Membranen, deren Porenstruktur ausgehend von der Oberfläche einen Gradienten aufweist und bei denen von der Oberfläche ausgehend die Porengröße zunächst abnimmt bis zu einer Schicht mit minimaler Porengröße und zur anderen Oberfläche hin die Porengröße dann zunimmt. Die Trennschicht mit minimaler Porengröße liegt bei diesen Membranen des Stands der Technik also innerhalb der Membranwand.

Um in der Anwendung eine ausreichende und stabile Filtrationsleistung zu gewährleisten, weist die erfindungsgemäße Hohlfasermembran einen Transmembranfluss von mindestens 0,5 ml/($cm^2$·min·bar) auf. Vorzugsweise ist der Transmembranfluss höchstens 2,0 ml/($cm^2$·min·bar), da bei höheren Transmembranflüssen für die erfindungsgemäßen Membranen eine Abnahme der Stabilität gegenüber mechanischen Beanspruchungen zu verzeichnen ist. Besonders bevorzugt weist die erfindungsgemäße Hohlfasermembran einen Transmembranfluss im Bereich von 0,6 bis 1,5 ml/($cm^2$·min·bar) auf. Derartige Membranen besitzen ein ausgewogenes Eigenschaftsbild hinsichtlich ihrer Permeabilität und ihrer mechanischen Stabilität. In besonderem Maße geeignet sind erfindungsgemäße Hohlfasermembranen mit einem Transmembranfluss im Bereich von 0,8 bis 1,4 ml/($cm^2$·min·bar).

Ebenso sind bevorzugte erfindungsgemäße Hohlfasermembranen solche, die eine Bruchfestigkeit $\sigma_B$, d.h. eine auf die Querschnittsfläche $A_Q$ ihrer Wand bezogene Bruchkraft BK von mindestens 500 cN/$mm^2$ aufweisen. Derartige Membranen zeigen bei Ultrafiltrationsanwendungen hinreichend hohe mechanische Stabilitäten. Besonders bevorzugt beträgt die Bruchfestigkeit $\sigma_B$ mindestens 700 cN/$mm^2$. Hohlfasermembranen mit einer Bruchfestigkeit von mindestens 750 cN/$mm^2$ sind bestens geeignet. Zur Gewährleistung einer ausreichenden Stabilität gegenüber Druckbelastung von innen bei der Durchströmung der erfindungsgemäßen Hohlfasermembranen von innen nach außen weisen diese bevorzugt einen Berstdruck bei Innendruckbelastung von mindestens 10 bar auf. Besonders vorteilhaft sind Hohlfasermembranen mit einem Berstdruck von mindestens 13 bar.

Nach der vorliegenden Erfindung werden erstmals Hohlfasermembranen für die Ultrafiltration zur Verfügung gestellt, die gleichzeitig eine hohe Permeabilität und eine hohe mechanische Stabilität aufweisen, wobei diese herausragende Charakteristik der erfindungsgemäßen Hohlfasermembranen auf deren besondere Struktur bzw. Architektur zurückzuführen ist. In einer bevorzugten Ausführungsform ist für die erfindungsgemäße Hohlfasermembran das Produkt TMF·BK aus dem Transmembranfluss TMF für Wasser und der Bruchkraft BK der Hohlfasermembran größer als 400 cN·ml/($cm^2$·min·bar). Hohlfasermembranen, für die das Produkt TMF·BK größer als 500 cN·ml/($cm^2$·min·bar) ist, sind besonders bevorzugt.

Erfindungsgemäß liegt die Wanddicke der erfindungsgemäßen Hohlfasermembranen im Bereich von 100 bis 450 μm. Unterhalb einer Wanddicke von 100 μm lassen sich in der Regel die erforderlichen mechanischen Stabilitäten nicht mehr gewährleisten, während bei Wanddicken oberhalb von 450 μm in die erreichbaren Transmembranflüsse deutlich abnehmen. Es ist von Vorteil, wenn die erfindungsgemäßen Hohlfasermembranen eine Wanddicke im Bereich von 150 bis 350 μm besitzen und besonders vorteilhaft, wenn die Wanddicke im Bereich von 180 bis 250 μm liegt. Zur Erzielung einer guten Durchströmung der Lumina der Hohlfasermembranen in der Anwendung, insbesondere eines günstigen Druckabfalls liegt der Innendurchmesser der erfindungsgemäßen Hohlfasermembranen vorzugsweise im Bereich von 500 bis 1500 μm und besonders bevorzugt im Bereich von 650 bis 1200 μm.

Zur Gewährleistung einer ausreichenden Permeabilität liegt die Porosität der erfindungsgemäßen Hohlfasermembranen bevorzugt oberhalb von 60 Vol.-%. Auf der anderen Seite sind zu hohe Volumenporositäten wegen eines Verlusts an mechanischer Stabilität von Nachteil, so dass die Porosität in der Regel vorzugsweise unterhalb von 90 Vol.-% liegt. Besonders bevorzugt weisen die erfindungsgemäßen Hohlfasermembranen eine Volumenporosität im Bereich von 70 bis 85 Vol.-% auf.

Die erfindungsgemäßen Hohlfasermembranen sollen für Anwendungen im Bereich der Ultrafiltration einsetzbar sein. Hierbei wird das Trennverhalten der Hohlfasermembran durch die Trennschicht bestimmt, die auf der dem Lumen zugewandten Seite der Membranwand liegt. Wie ausgeführt, decken Ultrafiltrationsmembranen auf Grund der Größe der das Trennverhalten bestimmenden Poren in der Trennschicht Trenngrenzen bezüglich des Rückhalts von Teilchen oder Molekülen im Bereich zwischen 20 000 und 200 000 ab. In einer bevorzugten Ausführungsform weist die erfindungsgemäße Hohlfasermembran eine Trenngrenze im Bereich zwischen 50 000 und 150 000 Dalton auf. Besonders bevorzugt liegt die Trenngrenze zwischen 65 000 und 120 000 Dalton.

Die Trenngrenze wird dabei aus dem Rückhaltevermögen der Membran für Dextranmoleküle unterschiedlicher Molmasse ermittelt. Hierbei wird die zu charakterisierende Membran im cross-flow Modus von einer polydispersen wässrigen Dextranlösung (Pool) überströmt. Aus dem Anteil von Dextranmolekülen unterschiedlicher Molmasse im Filtratstrom bzw. im Pool werden die Siebkoeffizienten für Dextranmoleküle unterschiedlicher Molmasse ermittelt. Als Trenngrenze wird diejenige Molmasse definiert, für die sich ein Siebkoeffizient von 0,1 bzw. ein Rückhalt von 90% ergibt.

Die Herstellung der erfindungsgemäßen Membranen erfolgt aus einer homogenen Spinnlösung aus der Polymerkomponente und dem Lösemittelsystem. Dabei umfasst die Polymerkomponente ein hydrophobes aromatisches Sulfonpolymer und mindestens ein hydrophiles Polymer. Erfindungsgemäß beträgt die Konzentration des Sulfonpolymers in der Spinnlösung 17 bis 27 Gew.-%. Unterhalb einer Konzentration von 17 Gew.-% ergeben sich insbesondere Nachteile hinsichtlich der mechanischen Stabilität der erhaltenen Hohlfasermembran. Andererseits weisen Membranen, die aus Spinnlösungen mit mehr als 27 Gew.-% des Sulfonpolymers erhalten werden, eine zu dichte Struktur und zu geringe Permeabilitäten auf. Vorzugsweise enthält die Spinnlösung 20 bis 25 Gew.-% des hydrophoben aromatischen Sulfonpolymers. Das Sulfonpolymer kann auch Additive wie z.B. Antioxidantien, Nukleierungsmittel, UV-Absorber und dergleichen enthalten, um die Eigenschaften der Membranen in gezielter Weise zu modifizieren.

Vorteilhafte hydrophobe aromatische Sulfonpolymere, aus welchen die erfindungsgemäße Membran aufgebaut ist bzw. welche im erfindungsgemäßen Verfahren eingesetzt werden, sind Polysulfon, Polyethersulfon, Polyphenylensulfon oder Polyarylethersulfon. In einer besonders bevorzugten Ausführungsform ist das hydrophobe aromatische Sulfonpolymer ein Polysulfon oder ein Polyethersulfon mit den in nachstehenden Formeln (I) und (II) dargestellten wiederkehrenden Moleküleinheiten

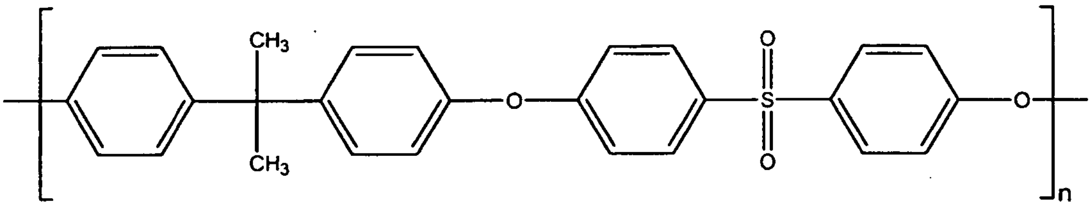

( I )

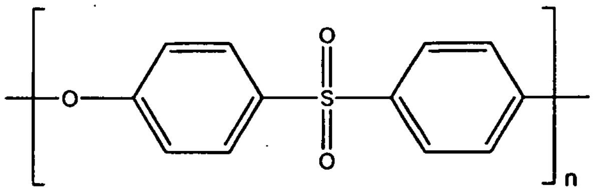

( II )

Als das mindestens eine hydrophile Polymer werden vorteilhafterweise langkettige Polymere eingesetzt, die auf der einen Seite eine Kompatibilität zu dem hydrophoben aromatischen Sulfonpolymer aufweisen und die über wiederkehrende polymere Einheiten verfügen, die an sich hydrophil sind. Bevorzugt wird ein hydrophiles Polymer mit einem mittleren Molekulargewicht $M_W$ von mindestens 10 000 Dalton eingesetzt. Vorzugsweise ist das hydrophile Polymer Polyvinylpyrrolidon, Polyethylenglykol, Polyvinylalkohol, Polyglykolmonoester, Polysorbitat, wie z.B. Polyoxyethylensorbitanmonooleat, Carboxylmethylcellulose oder eine Modifikation oder ein Copolymer dieser Polymere. Besonders bevorzugt sind Polyvinylpyrrolidon und Polyethylenglykol.

Unter dem mindestens einen hydrophilen Polymer werden im Rahmen der vorliegenden Erfindung auch Mischungen von verschiedenen hydrophilen Polymeren verstanden. So kann das hydrophile Polymer beispielsweise eine Mischung von chemisch verschiedenen hydrophilen Polymeren oder von hydrophilen Polymeren mit unterschiedlichen Molekulargewichten sein, z.B. eine Mischung von Polymeren, deren Molekulargewicht sich um den Faktor 5 oder mehr unterscheidet. In einer bevorzugten Ausführungsform umfasst das mindestens eine hydrophile Polymer eine Mischung

aus Polyvinylpyrrolidon oder Polyethylenglykol mit einem hydrophil modifizierten aromatischen Sulfonpolymer. In einer besonders bevorzugten Ausführungsform ist das hydrophil modifizierte aromatische Sulfonpolymer ein sulfoniertes aromatisches Sulfonpolymer, insbesondere eine sulfonierte Modifikation des in der erfindungsgemäßen Membran bzw. im erfindungsgemäßen Verfahren eingesetzten hydrophoben aromatischen Sulfonpolymers. Mit besonderem Vorteil lassen sich Mischungen aus Polyethersulfon, sulfoniertem Polyethersulfon und Polyvinylpyrrolidon für die erfindungsgemäßen Hohlfasermembranen bzw. für das erfindungsgemäße Verfahren einsetzen. Durch die Anwesenheit eines hydrophil modifizierten aromatischen Sulfonpolymers werden Hohlfasermembranen mit besonders stabilen hydrophilen Eigenschaften in der Anwendung erhalten.

Ein Großteil des mindestens einen hydrophilen Polymers wird bei der Herstellung der erfindungsgemäßen Hohlfasermembran aus der Membranstruktur ausgewaschen. Mit Blick auf die geforderten hydrophilen Eigenschaften der erfindungsgemäßen Hohlfasermembranen und ihre Benetzbarkeit ist es jedoch erforderlich, dass ein bestimmter Anteil des mindestens einen hydrophilen Polymers in der Membran verbleibt. Die fertige Hohlfasermembran weist daher das mindestens eine hydrophile Polymer bevorzugt in einer Konzentration im Bereich zwischen 1 bis 15 Gew.-% und besonders bevorzugt zwischen 3 und 10 Gew.-%, bezogen auf das Gewicht der fertigen Hohlfasermembran, auf. Das hydrophile Polymer kann darüber hinaus in der fertigen Membran noch chemisch oder physikalisch modifiziert werden. So kann beispielsweise Polyvinylpyrrolidon nachträglich durch Vernetzung wasserunlöslich gemacht werden.

Das einzusetzende Lösemittelsystem ist auf das verwendete hydrophobe aromatische Sulfonpolymer sowie auf das mindestens eine hydrophile Polymer abzustimmen, so dass eine homogene Spinnlösung hergestellt werden kann. Vorzugsweise umfasst das Lösungsmittelsystem polare aprotische Lösungsmittel wie Dimethylformamid, Dimethylacetamid, Dimethylsulfoxid, N-Methylpyrrolidon oder deren Mischungen oder protische Lösemittel wie etwa ε-Caprolactam. Ferner kann das Lösungsmittelsystem bis zu 80 Gew.-% an latentem Lösemittel enthalten, wobei unter einem latenten Lösemittel im Rahmen der vorliegenden Erfindung ein solches verstanden wird, das das Sulfonpolymer nur schlecht oder erst bei erhöhter Temperatur löst. Im Fall der Verwendung von ε-Caprolactam als Lösemittel können beispielsweise γ-Butyrolacton, Propylencarbonat oder Polyalkylenglykol eingesetzt werden. Darüber hinaus kann das Lösungsmittelsystem Nichtlöser für das membranbildende Polymer enthalten, wie z.B. Wasser, Glycerin, niedermolekulare Polyethylenglykole mit einem Gewichtsmittel des Molekulargewichts von weniger als 1000 Dalton oder niedermolekulare Alkohole, wie etwa Ethanol oder Isopropanol. In einer bevorzugten Ausführungsform des erfindungsgemäßen Verfahrens umfasst das Lösemittelsystem als Lösemittel ε-Caprolactam. Besonders bevorzugt ist in diesem Fall ein Lösemittelsystem, welches 35 bis 50 Gew.-%, bezogen auf das Gewicht des Lösemittelsystems, ε-Caprolactam, 35 bis 50 Gew.-%, bezogen auf das Gewicht des Lösemittelsystems, γ-Butyrolacton sowie 0 bis 10 Gew.-%, bezogen auf das Gewicht des Lösemittelsystems, Nichtlöser für die Polymerkomponente umfasst.

Nach Entgasung und Filtrierung zur Entfernung von nicht gelösten Partikeln wird die homogene Spinnlösung durch den Ringspalt einer üblichen Hohlfadendüse zu einem Hohlfaden extrudiert. Durch die in der Hohlfadendüse koaxial zum Ringspalt angeordnete zentrale Düsenöffnung wird eine Innenfüllung extrudiert, die ein Koagulationsmedium für das hydrophobe aromatische Sulfonpolymer ist und die gleichzeitig das Lumen des Hohlfadens stabilisiert. Die Spaltweite des Ringspalts sowie der Innendurchmesser der zentralen Düsenöffnung wird in Abhängigkeit von der gewünschten Wandstärke der erfindungsgemäßen Hohlfasermembran ausgewählt. Vorzugsweise liegt die Spaltweite des Ringspalts im Bereich zwischen 100 und 500 μm. Für die Herstellung erfindungsgemäßer Hohlfasermembranen mit bevorzugter Wanddicke im Bereich von 150 bis 350 μm liegt die Spaltweite vorteilhafterweise im Bereich zwischen 150 und 400 μm. Der Innendurchmesser der zentralen Düsenöffnung liegt bevorzugt im Bereich von 400 bis 1500 μm und besonders bevorzugt im Bereich von 500 und 1200 μm.

Es ist zu beachten, dass die zuvor und im folgenden beschriebenen erfindungsgemäßen Verfahrensbedingungen zu der für die erfindungsgemäßen Hohlfasermembranen geforderten Membranstruktur führen, solange die Wanddicke der erhaltenen Hohlfasermembranen in dem für die erfindungsgemäßen Hohlfasermembranen geforderten Bereich, d.h. im Bereich von 100 bis 450 μm liegen. So zeigt sich beispielsweise, dass die gleichen Verfahrensbedingungen bei der Herstellung dünnwandiger Hohlfasermembranen, z.B. von Membranen mit einer Wanddicke von ca. 30 μm, zu einer Struktur in der Membranwand führen, die von der der erfindungsgemäßen Membranen abweicht.

Die Innenfüllung, d.h. das innere Koagulationsmedium besteht aus einem der zuvor genannten Lösemittel, vorzugsweise aus einem der auch im Lösemittelsystem der Spinnlösung eingesetzten Lösemittel sowie notwendigerweise einem Nichtlöser. Dieser Nichtlöser soll die Koagulation des hydrophoben aromatischen Sulfonpolymers auslösen, kann das mindestens eine hydrophile Polymer jedoch lösen. Sofern im Lösemittelsystem ein Nichtlöser enthalten ist, kann es sich bei dem in der Innenfüllung enthaltenen um denselben Nichtlöser handeln, wobei natürlich zur Erzielung einer ausreichenden Fällwirkung die Nichtlöserkonzentration in der Innenfüllung gegenüber derjenigen des Lösemittelsystem erhöht ist. Für die Innenfüllung kann jedoch auch ein anderer Nichtlöser als für das Lösemittelsystem eingesetzt werden. Der eingesetzte Nichtlöser kann auch aus mehreren verschiedenen Nichtlöserkomponenten zusammengesetzt sein. Im bevorzugten Fall der Verwendung von ε-Caprolactam als Lösemittel wird als Innenfüllung vorzugsweise eine Mischung aus Glycerin und ε-Caprolactam eingesetzt.

Erfindungswesentlich zur Ausbildung der erfindungsgemäßen Hohlfasermembran ist, dass der Hohlfaden nach

Austritt aus der Hohlfadendüse und vor Eintauchen in das Koagulationsmedium eine Klimazone mit definierten Klimabedingungen durchläuft. Die Klimazone kann dabei z.B. als gekapselte Kammer ausgebildet sein. Aus technischen Gründen kann es erforderlich sein, wenn zwischen der Hohlfadendüse und der Klimazone ein Luftspalt besteht. Vorteilhafterweise sollte dieser Spalt jedoch so klein wie möglich sein; vorzugsweise schließt die Klimazone direkt an die Hohlfadendüse an.

Gemäß der Erfindung hat der Hohlfaden eine Verweilzeit in der Klimazone von 0,5 bis 10 s, wobei die Klimazone Luft mit einer relativen Luftfeuchtigkeit von 40 bis 95 % und einer Temperatur von 50 bis 70°C enthält. Vorzugsweise weist die in der Klimazone enthaltene Luft eine relative Luftfeuchtigkeit von 55 bis 85 % auf. In einer ebenfalls bevorzugten Ausführungsform des erfindungsgemäßen Verfahrens beträgt die Verweilzeit des Hohlfadens in der Klimazone 1 bis 5 s. Zur Ausbildung stabiler Bedingungen in der Klimazone wird diese von der Luft vorzugsweise mit einer Strömungsgeschwindigkeit von weniger als 0,5 m/s und besonders bevorzugt mit einer Strömungsgeschwindigkeit im Bereich von 0,15 bis 0,35 m/s durchströmt.

Bei Durchführung des Hohlfadens durch die auf die erfindungsgemäß geforderten Klimabedingungen eingestellte Klimazone wird eine Vorkoagulation des Hohlfadens durch Aufnahme der als Nichtlöser wirkenden Luftfeuchtigkeit an der Hohlfadenaußenseite induziert. Gleichzeitig muss die Verweilzeit in dem erfindungsgemäß geforderten Bereich eingestellt werden. Mit diesen Maßnahmen wird entscheidend Einfluss auf die Ausbildung der Außenschicht der erfindungsgemäßen Hohlfasermembran genommen, so dass diese eine im wesentlichen isotrope Struktur erhält.

Nach Durchlaufen der Klimazone wird der vorkoagulierte Hohlfaden in ein wässriges, auf 50 bis 80°C temperiertes Koagulationsmedium geführt, um die Ausbildung der Membranstruktur zu vervollständigen und die Membranstruktur zu fixieren. Vorzugsweise ist das Koagulationsmedium auf eine Temperatur im Bereich von 60 bis 75°C temperiert. In einer bevorzugten Ausgestaltung des erfindungsgemäßen Verfahrens ist das Koagulationsmedium Wasser bzw. ein Wasserbad.

Im Koagulationsmedium wird die Membranstruktur zunächst soweit ausgefällt, dass diese bereits eine hinreichende Stabilität aufweist und im Koagulationsmedium z.B. über Umlenkwalzen oder ähnliches umgelenkt werden kann. Im weiteren Verlauf wird die Koagulation vervollständigt und die Membranstruktur stabilisiert. Dabei erfolgt gleichzeitig eine Extraktion des Lösemittelsystems sowie löslicher Substanzen. In der Regel wird ein Großteil des hydrophilen Polymers, d.h. z.B. des Polyvinylpyrrolidons, aus der Membranstruktur extrahiert, so dass die Koagulationsbäder gleichzeitig als Wasch- oder Extraktionsbäder fungieren. Als Koagulations- bzw. Waschmedium in diesen Koagulations- bzw. Waschbädem wird bevorzugt Wasser eingesetzt.

Nach der Extraktion wird die erhaltene Hohlfasermembran getrocknet und die getrocknete Membran danach aufgewickelt. Während der Extraktion und Trocknung der Membran kann eine geringfügige Verstreckung von Vorteil sein, um bestimmte Membraneigenschaften wie z.B. die Oberflächenporosität und die Trenneigenschaften gezielt einzustellen. Die erfindungsgemäße Hohlfasermembran kann anschließend ggf. texturiert werden, um die Austauscheigenschaften der Hohlfasermembran im Bündel zu verbessern. Schließlich kann die Hohlfasermembran mit üblichen Verfahren z.B. auf eine Spule gewickelt oder direkt zu Bündeln mit geeigneter Fadenzahl und Länge verarbeitet werden. Vor der Herstellung der Bündel können zu den Hohlfasermembranen auch Beilegfäden, z.B. in Form von Multifilamentgarnen gegeben werden, um so für eine Beabstandung der Hohlfasermembranen untereinander und für eine bessere Umströmbarkeit der einzelnen Hohlfasermembranen im Bündel zu sorgen.

Die Erfindung wird anhand der im folgenden beschriebenen Beispiele und Figuren näher erläutert, wobei der Umfang der Erfindung durch die Beispiele nicht eingeschränkt wird.

Es zeigen:

Fig. 1: Rasterelektronenmikroskopische (REM-) Aufnahme des Querschnitts einer Membran gemäß Beispiel 1 bei 250-facher Vergrößerung.

Fig. 2: Rasterelektronenmikroskopische (REM-) Aufnahme des Querschnitts einer Membran gemäß Beispiel 3 bei 320-facher Vergrößerung.

In den Beispielen wurden folgende Methoden zur Charakterisierung der erhaltenen Membranen angewendet:

<u>Transmembranfluss (Wasserpermeabilität):</u>

Aus den zu prüfenden Hohlfasermembranen wird eine Prüfzelle mit definierter Hohlfaserzahl und Länge gefertigt. Die Hohlfasern werden dafür beidseitig an ihren Enden in ein Polyurethanharz eingebettet. Nach dem Aushärten des Harzes werden die Einbettungen auf eine Länge von ca. 30 mm geschnitten, wobei die Lumina der Hohlfasermembranen durch den Schnitt geöffnet werden. Die Hohlfaserlumina in den Einbettungen müssen auf Durchgängigkeit überprüft werden. Die freie Länge der Hohlfasermembranen zwischen den Einbettungen beträgt üblicherweise 120 +/- 10 mm. Die Anzahl der Hohlfasemembranen ist so zu bemessen, dass unter Berücksichtigung der freien Länge und des Innendurchmessers der Hohlfasermembranen eine Filtrationsfläche von ca. 30 $cm^2$ in der Prüfzelle bereitgestellt wird.

Die Prüfzelle wird .mit in eine Prüfapparatur eingebunden und mit auf 25°C temperiertem ultrafiltriertem und vollentsalztem Wasser bei einem definiertem Prüfdruck (ca. 0,4 bar) durchströmt. Die während einer Messzeit von 2 min erhaltene filtrierte Wassermenge, d.h. das während der Messung erzeugte Permeat wird gravimetrisch oder volumetrisch erfasst. Vor Beginn der Messung muss die Anlage luftfrei gespült werden. Zur Bestimmung des TMF werden in der Prüfapparatur der Eingangs- und Ausgangsdruck an der Prüfzelle gemessen. Die Messung wird bei 25°C durchgeführt.

Der Transmembranfluss TMF wird nach der Formel (III)

$$TMF = \frac{V_W}{\Delta t \cdot A_M \cdot \Delta p} \quad \left[\frac{ml}{cm^2 \cdot min \cdot bar}\right] \qquad (III)$$

ermittelt. Hierbei sind:

$V_w$ = durch die Membranprobe während der Messzeit hindurch geströmte Wasservolumen [ml]
$\Delta t$ = Messzeit [min]
$A_M$ = durchströmte Fläche der Membranprobe (üblicherweise 30 $cm^2$)
$\Delta_p$ = eingestellter Druck während der Messung [bar]

<u>Charakterisierung der Trenngrenze durch Bestimmung des Rückhaltevermögens für Dextranmoleküle unterschiedlicher Molmasse</u>

Die zu charakterisierende Membran wird im Crossflow-Modus von einer polydispersen wässrigen Dextranlösung (Pool) angeströmt. Es wird eine definierte Wandscherrate und eine definierte Filtratflussdichte durch die Membran eingestellt. Der Anteil von Dextranmolekülen unterschiedlicher Molmasse MW im Filtratstrom bzw. im Pool wird mit Hilfe der Gelpermeationschromatographie ermittelt.

Dazu wird das GPC-Spectrum des Pools bzw. Filtrates in 40 äquidistante Bereiche unterteilt, deren Fläche durch numerische Integration ermittelt wird. Jedem dieser Zeitintervalle wird eine Molmasse entsprechend dem Eichspektrum zugeordnet, das mit monodispersen Dextranmolekülen bekannter Molmasse ermittelt wird. Den Siebkoeffizienten der Membran gegenüber Dextranmolekülen der Molmasse MW erhält man, indem man das Verhältnis der dieser Molmasse zugeordneten Flächensegmente der GPC-Spektren des Filtrats und des Pools bildet.

$$SK_{MW} = \frac{\text{Fläche (MW, Permeat)}}{\text{Fläche (MW, Pool)}} \qquad (IV)$$

$$\text{Retention} = (1 - SK) \cdot 100\ [\%] \qquad (V)$$

Der Retentionskoeffizient $R_{MW}$ für Dextranmoleküle der Molmasse MW berechnet sich wie folgt:

$$R_{MW} = 1 - SK_{MW} \qquad (VI)$$

Da das ermittelte Retentionsprofil empfindlich von den Versuchsbedingungen abhängt (Konzentrationspolarisation), müssen die Filtratflussdichte und die Wandscherrate bei der Bestimmung des Retentionsprofils eindeutig definiert werden. Für ein Hohlfasermembranmodul der Länge l, das n Hohlfasermembranen enthält, werden Filtratflussdichte $Q_F$ und axialer Volumenfluss $Q_L$ wie folgt berechnet:

$$Q_L = \frac{n \cdot d^3 \cdot \gamma_W}{1{,}69 \cdot 10^{11}} \qquad (VII)$$

$\gamma_W$: Wandscherrate = 2000/s
d: Innendurchmesser der Hohlfasermembranen [μm]
n: Zahl der Hohlfasermembranen im Membranmodul
$Q_L$: axialer Volumenfluss im Lumen der Hohlfasermembranen [ml/min]

$$Q_F = n \cdot \pi \cdot d \cdot l \cdot V_L \cdot 10^{-9} \qquad (VIII)$$

$Q_F$: Filtratfluss [ml/min]
l: freie Länge der Hohlfasermembran im Membranmodul [cm]
$V_L$: Geschwindigkeit im Lumen [cm/min] ($V_L = 4 \cdot 10^8 \cdot Q_L/(n \cdot \pi \cdot d^2)$ )
n: Zahl der Hohlfasern im Membranmodul

Zusammensetzung der verwendeten Dextranlösung (Hersteller: Pharmacia Biotech; Artikelbezeichnung: T10, T40, T70, T500)

| Dextrantyp: | T10 | T40 | T70 | T500 |
|---|---|---|---|---|
| Einwaage: | 0,64 g/l | 0,90 g/l | 0,4 g/l | 0,66 g/l |

Die Lösungen werden mit VE-Wasser angesetzt.

Bruchkraft, Bruchfestigkeit

Die Messung der Bruchkraft der Hohlfasermembranen erfolgt mit einer üblichen Universalprüfmaschine der Fa. Zwick, Ulm.

Die Hohlfasermembranprobe wird mit konstanter Geschwindigkeit in Längsrichtung bis zum Bruch gedehnt. Die dafür benötigte Kraft wird in Abhängigkeit der Längenänderung gemessen und in einem Kraft-Dehnungsdiagramm festgehalten. Die Messung erfolgt als Mehrfachbestimmung an mehreren Hohlfasermembranproben bei 100 mm Einspannlänge und bei einer Zuggeschwindigkeit von 500 mm/min. Das Vorspanngewicht beträgt 2,5 cN. Die zum Bruch benötigte Kraft BK wird als gemittelter Zahlenwert in cN ausgegeben.

Die Bruchfestigkeit $\sigma_B$ der Hohlfasermembranprobe wird durch Normierung der Bruchkraft BK auf die Querschnittsfläche $A_Q$ der Membranwand erhalten.

Berstd ruck

Eine ca. 40 cm lange Hohlfasermembranprobe wird als Schlaufe mit ihren Enden z.B. in Polyurethanharz eingebettet.

Die Membran wird lumenseitig mit einer Prüfflüssigkeit aus 1,5 g/l Methylcellulose in Wasser benetzt, um so die Poren der Membran unter Beibehaltung der Porenstruktur zuzuschwämmen. Hierdurch werden die Membranwände gasundurchlässig. Die Hohlfasermembranprobe wird anschließend lumenseitig mit Stickstoff beaufschlagt, wobei mittels einer Druckerhöhungsstation, einem Drosselventil und einem Hochdruckbehälter ein linearer Druckanstieg (2 bar/min) an der Probe erzeugt wird.

Der Druck am Eingang der Probe wird gemessen und auf einem Schreiber dokumentiert. Der Druck wird so lange erhöht, bis die Membranprobe platzt. Platzt bzw. explodiert die Membranprobe, fällt der am Druck an der Prüfzelle schlagartig ab. Der Druck am Umkehrpunkt des Druckanstiegs wird als Berstdruck abgelesen.

Beispiel 1

Zur Herstellung einer homogenen Spinnlösung wurden
21,00 Gew.-% Polyethersulfon (Ultrason E 6020, Fa. BASF),
12,60 Gew.-% Polyvinylpyrrolidon (PVP K30, Fa. ISP),

31,54 Gew.-% ε-Caprolactam,
31,54 Gew.-% γ-Butyrolacton und
3,32 Gew.-% Glycerin
bei einer Temperatur von ca. 100 °C intensiv gemischt. Die resultierende Lösung wurde auf ca. 60 °C abgekühlt, entgast, filtriert und dem Ringspalt einer Hohlfadendüse mit einer Ringspaltweite von 0,24 mm und einem Innendurchmesser der Düsennadel von 0,6 mm zugeführt, die auf 35 °C temperiert war. Zur Ausbildung von Lumen und lumenseitiger Trennschicht wurde durch die Düsennadel der Hohlfadendüse eine Innenfüllung gefördert, die aus ε-Caprolactam/ Glycerin/ Wasser im Gewichtsverhältnis 47:37:16 bestand. Der ausgeformte Hohlfaden wurde durch einen konditionierten Klimakanal (Klima: 60°C; 60 % relative Luftfeuchte, t = 4s) geführt, in einem auf ca. 70°C temperierten Wasser enthaltenden Fällbad ausgefällt und die Membranstruktur fixiert. Unmittelbar nach der Fixierung wurde die nasse Membran zu ca. 1 m langen Hohlfasermembranbündeln mit ca. 900 Hohlfasern konfektioniert, mit ca. 90°C warmem Wasser 3 h lang extrahiert und abschließend ca. 2 h lang mit 90°C heißer Luft getrocknet. Die in den Bündeln enthaltenen Hohlfadenmembranen hatten einen Lumendurchmesser von ca. 0,75 mm und eine Wanddicke von ca. 0,22 mm.

Die Membran wies einen Transmembranfluss in Wasser $TMF_W$ von 1,28 ml/(cm$^2$·min·bar) auf. Aus der mit Dextranen ermittelten Trennkurve wurde eine Trenngrenze von ca. 62 000 Dalton ermittelt. Die Membranen wiesen im Zugversuch eine Bruchkraft von 510 cN auf, womit sich eine Bruchfestigkeit von ca. 760 cN/mm$^2$ ergab. Das Produkt aus dem ermittelten Transmembranfluss und der Bruchkraft resultierte damit zu 653 cN·m/(cm$^2$min·bar). Der Berstdruck der Hohlfasermembranen gemäß diesem Beispiel betrug 15,75 bar.

Ausweislich der Untersuchung im Rasterelektronenmikroskop wies die Membran an ihrer Lumenseite eine Trennschicht mit einer Dicke von ca. 6 μm auf, an die sich nach außen eine ca. 160 bis 170 μm dicke Stützschicht anschloss, innerhalb derer ausgehend von der Trennschicht bis zu einer Zone mit maximaler Porengröße bei ca. 20 bis 25 % der Wandstärke die Größe der Poren stark zunahm und nach Durchlaufen des Maximums nach außen hin bis zur Außenschicht abnahm. An die Stützschicht schloss sich die Außenschicht mit einer Dicke von ca. 50 μm an, innerhalb derer eine im wesentlichen isotrope Porenstruktur, d.h. eine im wesentlichen konstante Porengröße vorlag. Figur 1 zeigt eine REM-Aufnahme der Hohlfasermembran gemäß Beispiel 1.

<u>Beispiel 2</u>

Zur Herstellung einer homogenen Spinnlösung wurden
19,46 Gew.-% Polyethersulfon (Ultrason E 6020, Fa. BASF),
13,65 Gew.-% Polyvinylpyrrolidon (PVP K30, Fa. ISP),
31,91 Gew.-% ε-Caprolactam,
31,61 Gew.-% γ-Butyrolacton und
3,37 Gew.-% Glycerin
bei einer Temperatur von ca. 100 °C intensiv gemischt. Die resultierende Lösung wurde auf ca. 60 °C abgekühlt, entgast, filtriert und dem Ringspalt einer Hohlfadendüse mit einer Ringspaltweite von 0,16 mm und einem Innendurchmesser der Düsennadel von 0,6 mm zugeführt, die auf 35 °C temperiert war. Zur Ausbildung von Lumen und lumenseitiger Trennschicht wurde durch die Düsennadel der Hohlfadendüse eine Innenfüllung gefördert, die aus ε-Caprolactam/ Glycerin/ Wasser im Gewichtsverhältnis 45:37:18 bestand. Der ausgeformte Hohlfaden wurde durch einen konditionierten Klimakanal (Klima: 60°C; 60 % relative Luftfeuchte, t = 4s) geführt, in einem auf ca. 75 °C temperierten, Wasser enthaltenden Fällbad ausgefällt und die Membranstruktur fixiert. Unmittelbar nach der Fixierung wurde die nasse Membran zu ca. 1 m langen Hohlfasermembranbündeln mit ca. 900 Hohlfasern konfektioniert, mit ca. 90°C warmem Wasser 3 h lang extrahiert und abschließend ca. 2 h lang mit 90°C heißer Luft getrocknet. Die Hohlfasermembranen hatten einen Lumendurchmesser von ca. 0,70 mm und eine Wanddicke von ca. 0,15 mm.

Die Membranen wiesen einen Transmembranfluss in Wasser $TMF_W$ von 1,36 ml/(cm$^2$·min·bar) auf. Aus der mit Dextranen ermittelten Trennkurve wurde eine Trenngrenze von ca. 71 000 Dalton ermittelt. Die Bruchkraft im Zugversuch betrug 253 cN, womit sich eine Bruchfestigkeit von ca. 633 cN/mm$^2$ ergab. Der Berstdruck der Hohlfasermembranen gemäß diesem Beispiel ergab sich zu 11,5 bar.

Ausweislich der Untersuchung im Rasterelektronenmikroskop wies die Membran an ihrer Lumenseite eine Trennschicht mit einer Dicke von ca. 6 μm auf, an die sich nach außen eine Stützschicht anschloss, innerhalb derer ausgehend von der Trennschicht bis zu einer Zone mit maximaler Porengröße bei ca. 25 bis 30 % der Wandstärke die Größe der Poren zunahm und nach Durchlaufen des Maximums nach außen hin bis zur Außenschicht abnahm. Die Poren in der Zone mit maximaler Porengröße waren bei der Hohlfasermembran des Beispiels 2 kleiner als bei der gemäß Beispiel 1 hergestellten Hohlfasermembran. An die Stützschicht schloss sich die Außenschicht mit im wesentlichen isotroper Porenstruktur, d.h. im wesentlichen konstanter Porengröße, und einer Dicke von ca. 45 μm an.

Beispiel 3

Zur Herstellung einer homogenen Spinnlösung wurden
21,00 Gew.-% Polyethersulfon (Ultrason E 6020, Fa. BASF),
12,60 Gew.-% Polyvinylpyrrolidon (PVP K30, Fa. ISP),
31,54 Gew.-% ε-Caprolactam,
31,54 Gew.-% γ-Butyrolacton und
3,32 Gew.-% Glycerin
bei einer Temperatur von ca. 110 °C intensiv gemischt. Die resultierende Lösung wurde auf ca. 40 °C abgekühlt, entgast, filtriert und dem Ringspalt einer Hohlfadendüse mit einer Ringspaltweite von 0,24 mm und einem Innendurchmesser der Düsennadel von 0,6 mm zugeführt, die auf 35 °C temperiert war. Zur Ausbildung von Lumen und lumenseitiger Trennschicht wurde durch die Düsennadel der Hohlfadendüse eine Innenfüllung gefördert, die aus ε-Caprolactam/ Glycerin/ Wasser im Gewichtsverhältnis 45:37:18 bestand. Der ausgeformte Hohlfaden wurde durch einen konditionierten Klimakanal (Klima: 70°C; 85 % relative Luftfeuchte, t = 2,6 s) geführt, in einem auf ca. 66°C temperierten Wasser enthaltenden Fällbad ausgefällt und die Membranstruktur fixiert. Unmittelbar nach der Fixierung wurde die nasse Membran zu ca. 1 m langen Hohlfasermembranbündeln mit ca. 900 Hohlfasern konfektioniert, mit ca. 90°C warmem Wasser 3 h lang extrahiert und abschließend ca. 2 h lang mit 90°C heißer Luft getrocknet. Die in den Bündeln enthaltenen Hohlfadenmembranen hatten einen Lumendurchmesser von ca. 0,78 mm und eine Wanddicke von ca. 0,22 mm.

Die Membran wies einen Transmembranfluss in Wasser $TMF_W$ von 1,76 ml/($cm^2$·min·bar) auf. Aus der mit Dextranen ermittelten Trennkurve wurde eine Trenngrenze von ca. 185 000 Dalton ermittelt. Die Membranen wiesen im Zugversuch eine Bruchkraft von 502 cN auf, womit sich eine Bruchfestigkeit von ca. 730 cN/$mm^2$ ergab. Das Produkt aus dem ermittelten Transmembranfluss und der Bruchkraft resultierte damit zu 1070 cN·ml/($cm^2$·min·bar).

Die Membran wies an ihrer Lumenseite eine Trennschicht mit einer Dicke von ca. 8 μm auf, an die sich nach außen eine ca. 180 bis 190 μm dicke Stützschicht anschloss, innerhalb derer ausgehend von der Trennschicht bis zu einer Zone mit maximaler Porengröße bei ca. 20 % der Wandstärke die Größe der Poren stark zunahm und nach Durchlaufen des Maximums nach außen hin bis zur Außenschicht abnahm. An die Stützschicht schloss sich die Außenschicht mit einer Dicke von ca. 25 μm an, innerhalb derer eine im wesentlichen isotrope Porenstruktur, d.h. eine im wesentlichen konstante Porengröße vorlag. Figur 2 zeigt eine REM-Aufnahme des Wandquerschnitts der Hohlfasermembran gemäß Beispiel 3.

Vergleichsbeispiel 1

Aus 19,5 Gew.-% Polyethersulfon (Ultrason E 6020, Fa. BASF) und 13,65 Gew.-% Polyvinylpyrrolidon (PVP K30, Fa. ISP) wurde in 31,75 Gew.-% ε-Caprolactam, 31,75 Gew.-% γ-Butyrolacton und 3,35 Gew.-% Glycerin durch intensives Mischen bei einer Temperatur von ca. 100 °C eine homogene Spinnlösung hergestellt. Die erhaltene Lösung wird auf ca. 60 °C abgekühlt, entgast, filtriert und dem Ringspalt einer auf 67°C temperierten Hohlfadendüse mit einer Ringspaltweite von 0,05 mm und einem Innendurchmesser der Düsennadel von 0,15 mm zugeführt. Zur Ausbildung von Lumen und innenliegender Trennschicht wurde durch die Düsennadel der Hohlfadendüse eine Innenfüllung aus ε-Caprolactam/Glycerin/Wasser im Gewichtsverhältnis 43:41:16 gefördert. Der ausgeformte Hohlfaden wurde durch einen Klimakanal (Klima: ca. 55 °C; 80 % relative Luftfeuchte, t =1s) geführt und mittels der Innenfüllung sowie durch Hindurchleiten durch ein ca. 64 °C warmes Wasser enthaltendes Bad ausgefällt bzw. fixiert. Die so erhaltene Hohlfasermembran wurde anschließend mit ca. 90 °C warmem Wasser gewaschen und getrocknet. Es resultierte eine Hohlfasermembran mit einem Lumendurchmesser von ca. 0,2 mm und einer Wanddicke von ca. 0,03 mm.

Die Membran wies einen Transmembranfluss in Wasser $TMF_W$ von 0,4 ml/($cm^2$·min·bar) auf. Aus der mit Dextranen ermittelten Trennkurve wurde eine Trenngrenze von ca. 59 000 Dalton ermittelt. Die Membranen wiesen im Zugversuch eine Bruchkraft von 19,5 cN auf, womit sich eine Bruchfestigkeit von ca. 180 cN/$mm^2$ ergab.

Ausweislich der Untersuchung im Rasterelektronenmikroskop wies die Membran an ihrer Lumenseite eine Trennschicht mit einer Dicke von ca. 2 μm auf, an die sich nach außen eine Stützschicht anschloss, innerhalb derer ausgehend von der Trennschicht bis zu einer Zone mit maximaler Porengröße die Größe der Poren zunahm und nach Durchlaufen des Maximums nach außen hin abnahm. Die Stützschicht ging quasi kontinuierlich in die Außenschicht über, wobei innerhalb der Außenschicht eine weitere Abnahme der Porengrößen festzustellen war.

**Patentansprüche**

1. Hydrophile, integral asymmetrische semipermeable Hohlfasermembran zur Ultrafiltration aus einem hydrophoben aromatischen Sulfonpolymer sowie mindestens einem hydrophilen Polymer, welche eine ihrem Lumen zugewandte innere Oberfläche und eine nach außen gerichtete äußere Oberfläche und eine dazwischenliegende Wand mit einer

Wanddicke aufweist, wobei die Hohlfasermembran in ihrer Wand an der inneren Oberfläche eine offenporige Trennschicht, an die Trennschicht anschließend in Richtung auf die äußere Oberfläche eine Stützschicht mit asymmetrischer, schwammartiger Porenstruktur ohne Fingerporen und an die Stützschicht angrenzend in Richtung auf die äußere Oberfläche eine Außenschicht aufweist **dadurch gekennzeichnet, dass**

a. die Trennschicht eine Trenngrenze im Bereich zwischen 20.000 und 200.000 Dalton sowie eine Dicke von maximal 10% der Wanddicke besitzt und die Porenstruktur im Bereich der Trennschicht im wesentlichen isotrop ist,
b. die Größe der Poren in der Stützschicht ausgehend von der Trennschicht zunächst bis zu einer Zone mit maximaler Porengröße zunimmt und im Anschluss an diese Zone in Richtung auf die Außenschicht abnimmt,
c. die Außenschicht eine Dicke von 10 bis 30% der Wanddicke aufweist, die Porenstruktur im Bereich der Außenschicht im wesentlichen isotrop ist und die mittlere Größe der Poren in der Außenschicht größer als die mittlere Porengröße in der Trennschicht, jedoch kleiner als die mittlere Porengröße in der Stützschicht ist,
d. die Wanddicke im Bereich von 100 bis 450 μm liegt
e. und die Hohlfasermembran einen Transmembranfluss für Wasser von mindestens 0,5 ml/(cm$^2$·min·bar) und eine Bruchfestigkeit $\sigma_B$, d.h. eine auf die Querschnittsfläche $A_Q$ ihrer Wand bezogene Bruchkraft BK von mindestens 300 cN/mm$^2$aufweist.

2. Hohlfasermembran nach Anspruch 1, **dadurch gekennzeichnet, dass** sich die Zone mit maximaler Porengröße in einem Abstand von der inneren Oberfläche im Bereich zwischen 15 und 40% der Wanddicke befindet.

3. Hohlfasermembran nach einem oder beiden der Ansprüche 1 oder 2, **dadurch gekennzeichnet, dass** die Größe der maximalen Poren in der Zone mit maximaler Porengröße im Bereich zwischen 5 und 15 μm liegt.

4. Hohlfasermembran nach einem oder mehreren der Ansprüche 1 bis 3, **dadurch gekennzeichnet, dass** sie einen Transmembranfluss für Wasser im Bereich von höchstens 2,0 ml/(cm$^2$·min·bar) aufweist.

5. Hohlfasermembran nach einem oder mehreren der Ansprüche 1 bis 4, **dadurch gekennzeichnet, dass** das Produkt TMF·BK aus dem Transmembranfluss TMF für Wasser und der Bruchkraft BK der Hohlfasermembran größer als 400 cN·ml/(cm$^2$·min·bar) ist.

6. Hohlfasermembran nach Anspruch 5, **dadurch gekennzeichnet, dass** das Produkt TMF·BK größer als 500 cN·ml/(cm$^2$·min·bar) ist.

7. Hohlfasermembran nach einem oder mehreren der Ansprüche 1 bis 6, **dadurch gekennzeichnet, dass** sie eine Bruchfestigkeit $\sigma_B$, d.h. eine auf die Querschnittsfläche $A_Q$ ihrer Wand bezogene Bruchkraft BK von mindestens 500 cN/mm$^2$ aufweist.

8. Hohlfasermembran nach Anspruch 7, **dadurch gekennzeichnet, dass** sie eine Bruchfestigkeit $\sigma_B$ mindestens 700 cN/mm$^2$ beträgt.

9. Hohlfasermembran nach einem oder mehreren der Ansprüche 1 bis 8, **dadurch gekennzeichnet, dass** die Trennschicht eine Trenngrenze im Bereich zwischen 50 000 und 150 000 Dalton aufweist.

10. Hohlfasermembran nach einem oder mehreren der Ansprüche 1 bis 9, **dadurch gekennzeichnet, dass** die Wanddicke im Bereich von 150 bis 350 μm liegt.

11. Hohlfasermembran nach einem oder mehreren der Ansprüche 1 bis 10, **dadurch gekennzeichnet, dass** das hydrophobe aromatische Sulfonpolymer ein Polysulfon oder Polyethersulfon ist.

12. Hohlfasermembran nach einem oder mehreren der Ansprüche 1 bis 11, **dadurch gekennzeichnet, dass** das mindestens eine hydrophile weitere Polymer ein mittleres Molekulargewicht $M_w$ von mehr als 10 000 Dalton aufweist.

13. Hohlfasermembran nach einem oder mehreren der Ansprüche 1 bis 12, **dadurch gekennzeichnet, dass** das mindestens eine hydrophile Polymer ein Polyvinylpyrrolidon oder ein Polyethylenglykol umfasst.

14. Hohlfasermembran nach einem oder mehreren der Ansprüche 1 bis 12, **dadurch gekennzeichnet, dass** das mindestens eine hydrophile Polymer ein Polyvinylpyrrolidon oder ein Polyethylenglykol sowie ein hydrophil modifiziertes aromatisches Sulfonpolymer umfasst.

**15.** Hohlfasermembran nach Anspruch 14, **dadurch gekennzeichnet, dass** das hydrophil modifizierte aromatische Sulfonpolymer ein sulfoniertes aromatisches Sulfonpolymer ist.

**16.** Hohlfasermembran nach einem oder mehreren der Ansprüche 1 bis 15, **dadurch gekennzeichnet, dass** sie eine Volumenporosität im Bereich von 70 bis 85 Vol.-% aufweist.

**17.** Verfahren zur Herstellung einer Hohlfasermembran nach Anspruch 1, wobei das Verfahren die Schritte umfasst:

a. Herstellung einer homogenen Spinnlösung aus einer Polymerkomponente und einem Lösemittelsystem, wobei die Polymerkomponente 17 bis 27 Gew.-%, bezogen auf das Gewicht der Lösung, eines hydrophoben aromatischen Sulfonpolymers sowie 10 bis 30 Gew.-%, bezogen auf das Gewicht der Lösung, mindestens eines hydrophilen Polymers umfasst und das Lösemittelsystem aus 5 bis 80 Gew.-%, bezogen auf das Gewicht des Lösemittelsystems, eines Lösemittels für die Polymerkomponente, 0 bis 80 Gew.-%, bezogen auf das Gewicht des Lösemittelsystems, latentem Lösemittel für die Polymerkomponente sowie 0 bis 70 Gew.-%, bezogen auf das Gewicht des Lösemittelsystems, Nichtlöser für die Polymerkomponente besteht,
b. Extrusion der homogenen Spinnlösung durch den Ringspalt einer Hohlfadendüse zu einem Hohlfaden,
c. Extrusion einer Innenfüllung durch die zentrale Öffnung der Hohlfadendüse, wobei die Innenfüllung eine Mischung eines Lösemittels und eines Nichtlösers für das Sulfonpolymer umfasst,
d. Inkontaktbringen der Innenfüllung mit der Innenseite des Hohlfadens zur Auslösung der Koagulation im Inneren des Hohlfadens und zur Ausbildung einer Trennschicht an der Innenseite des Hohlfadens,
e. Hindurchleiten des Hohlfadens nach Austritt aus der Hohlfadendüse während einer Zeit von 0,5 bis 10 s durch eine Klimazone, enthaltend Luft mit einer relativen Luftfeuchtigkeit von 40 bis 95 % und einer Temperatur von 50 bis 70°C, anschließend
f. Hindurchleiten des Hohlfadens durch ein auf 50 bis 80 °C temperiertes wässriges Koagulationsmedium, um die Ausbildung der Membranstruktur zu vervollständigen und um die Membranstruktur zu fixieren,
g. Extraktion der so gebildeten Hohlfasermembran zur Entfernung des Lösemittelsystems sowie löslicher Substanzen,
h. Trocknung der Hohlfasermembran.

**18.** Verfahren nach Anspruch 17, **dadurch gekennzeichnet, dass** das hydrophobe aromatische Sulfonpolymer ein Polysulfon oder Polyethersulfon ist.

**19.** Verfahren nach einem oder beiden der Ansprüche 17 oder 18, **dadurch gekennzeichnet, dass** das mindestens eine hydrophile Polymer ein Polyvinylpyrrolidon oder ein Polyethylenglykol umfasst.

**20.** Verfahren nach einem oder mehreren der Ansprüche 17 bis 19, **dadurch gekennzeichnet, dass** das mindestens eine hydrophile Polymer ein Polyvinylpyrrolidon oder ein Polyethylenglykol sowie ein hydrophil modifiziertes aromatisches Sulfonpolymer umfasst.

**21.** Verfahren nach einem oder mehreren der Ansprüche 17 bis 20, **dadurch gekennzeichnet, dass** das Lösemittelsystem als Lösemittel ε-Caprolactam umfasst.

**22.** Verfahren nach Anspruch 21, **dadurch gekennzeichnet, dass** das Lösemittelsystem 35 bis 50 Gew.-%, bezogen auf das Gewicht des Lösemittelsystems, ε-Caprolactam, 35 bis 50 Gew.-%, bezogen auf das Gewicht des Lösemittelsystems, γ-Butyrolacton sowie 0 bis 10 Gew.-%, bezogen auf das Gewicht des Lösemittelsystems, Nichtlöser für die Polymerkomponente umfasst.

**23.** Verfahren nach Anspruch 21 oder 22, **dadurch gekennzeichnet, dass** als Innenfüllung eine Mischung aus Glycerin und ε-Caprolactam eingesetzt wird.

**24.** Verfahren nach einem oder mehreren der Ansprüche 17 bis 23, **dadurch gekennzeichnet, dass** die in der Klimazone enthaltende Luft eine relative Luftfeuchtigkeit von 55 bis 85 % aufweist.

**25.** Verfahren nach einem oder mehreren der Ansprüche 17 bis 24, **dadurch gekennzeichnet, dass** die in der Klimazone enthaltende Luft die Klimazone mit einer Strömungsgeschwindigkeit von weniger als 0,5 m/s durchströmt.

**26.** Verfahren nach einem oder mehreren der Ansprüche 17 bis 25, **dadurch gekennzeichnet, dass** das wässrige Koagulationsmedium auf 60 bis 75°C temperiert ist.

## Claims

**1.** Hydrophilic, integrally asymmetric, semi-permeable hollow-fibre membrane for ultrafiltration made from a hydrophobic aromatic sulfone polymer and at least one hydrophilic polymer, the membrane exhibiting an inner surface facing towards its lumen, an outer surface facing outwards and an intermediate wall with a wall thickness, whereby in its wall on the inner surface the hollow-fibre membrane has an open-pore separating layer, adjoining the separating layer towards the outer surface a subsequent supporting layer with asymmetric, sponge-like pore structure without finger pores and adjoining the supporting layer towards the outer surface an outer layer, **characterised in that**

a. The separating layer has a cutoff in the range between 20 000 and 200 000 daltons and a thickness of max. 10% of the wall thickness and the pore structure in the area of the separating layer is essentially isotropic,
b. The size of the pores in the supporting layer initially increases from the separating layer up to a zone with maximum pore size, then decreases beyond this zone towards the outer layer,
c. The outer layer has a thickness of 10 to 30% of the wall thickness, the pore structure in the area of the outer layer is essentially isotropic and the mean size of the pores in the outer layer is larger than the mean pore size in the separating layer, but smaller than the mean pore size in the supporting layer,
d. The wall thickness lies in the range from 100 to 450 μm, and
e. The hollow-fibre membrane has a transmembrane flow for water of at least 0.5 ml/($cm^2$·min·bar) and a breaking strength $\sigma_B$, i.e. a breaking force BK referred to the cross-sectional area $A_Q$ of its wall, of at least 300 cN/$mm^2$.

**2.** Hollow-fibre membrane according to Claim 1, **characterised in that** the zone with maximum pore size is located at a distance from the inner surface in the range between 15 and 40% of the wall thickness.

**3.** Hollow-fibre membrane according to one or both of Claims 1 and 2, **characterised in that** the size of the maximum pores in the zone with maximum pore size lies in the range between 5 and 15 μm.

**4.** Hollow-fibre membrane according to one or more of Claims 1 to 3, **characterised in that** it has a transmembrane flow for water in the range of max. 2.0 ml/($cm^2$·min·bar).

**5.** Hollow-fibre membrane according to one or more of Claims 1 to 4, **characterised in that** the product TMF·BK of the transmembrane flow TMF for water and the breaking force BK of the hollow-fibre membrane is larger than 400 cN·ml/($cm^2$·min·bar).

**6.** Hollow-fibre membrane according to Claim 5, **characterised in that** the product TMF·BK is larger than 500 cN·ml/($cm^2$·min·bar).

**7.** Hollow-fibre membrane according to one or more of Claims 1 to 6, **characterised in that** it has a breaking strength $\sigma_B$, i.e. a breaking force BK referred to the cross-sectional area $A_Q$ of its wall, of at least 500 cN/$mm^2$.

**8.** Hollow-fibre membrane according to Claim 7, **characterised in that** it has a breaking strength $\sigma_B$ of at least 700 cN/$mm^2$.

**9.** Hollow-fibre membrane according to one or more of Claims 1 to 8, **characterised in that** the separating layer has a cutoff in the range between 50 000 and 150 000 daltons.

**10.** Hollow-fibre membrane according to one or more of Claims 1 to 9, **characterised in that** the wall thickness lies in the range from 150 to 350 μm.

**11.** Hollow-fibre membrane according to one or more of Claims 1 to 10, **characterised in that** the hydrophobic aromatic sulfone polymer is a polysulfone or polyether sulfone.

**12.** Hollow-fibre membrane according to one or more of Claims 1 to 11, **characterised in that** the at least one hydrophilic further polymer has a mean molecular weight $M_w$ of more than 10 000 daltons.

**13.** Hollow-fibre membrane according to one or more of Claims 1 to 12, **characterised in that** the at least one hydrophilic polymer comprises a polyvinylpyrrolidone or a polyethylene glycol.

**14.** Hollow-fibre membrane according to one or more of Claims 1 to 12, **characterised in that** the at least one hydrophilic polymer comprises a polyvinylpyrrolidone or a polyethylene glycol and a hydrophilically modified aromatic sulfone polymer.

**15.** Hollow-fibre membrane according to Claim 14, **characterised in that** the hydrophilically modified aromatic sulfone polymer is a sulfonated aromatic sulfone polymer.

**16.** Hollow-fibre membrane according to one or more of Claims 1 to 15, **characterised in that** it has a volume porosity in the range from 70 to 85 vol.%.

**17.** Method for production of a hollow-fibre membrane according to Claim 1, whereby the method comprises the steps:

a. Production of a homogeneous spinning solution comprising a polymer component and a solvent system, whereby the polymer component comprises 17 to 27 wt.%, referred to the weight of the solution, of a hydrophobic aromatic sulfone polymer and 10 to 30 wt.%, referred to the weight of the solution, of at least one hydrophilic polymer, while the solvent system consists of 5 to 80 wt.%, referred to the weight of the solvent system, of a solvent for the polymer component, 0 to 80 wt.%, referred to the weight of the solvent system, of a latent solvent for the polymer component and 0 to 70 wt.%, referred to the weight of the solvent system, of a non-solvent for the polymer component,
b. Extrusion of the homogeneous spinning solution through the annular gap of a hollow-fibre die to produce a hollow fibre,
c. Extrusion of an interior filler through the central opening of the hollow-fibre die, said interior filler consisting of a mixture of a solvent and a non-solvent for the sulfone polymer,
d. Bringing of the interior filler into contact with the inside of the hollow fibre to initiate the coagulation inside the hollow fibre and to form a separating layer on the inside of the hollow fibre,
e. Passage of the hollow fibre after leaving the hollow-fibre die for a period of 0.5 to 10 s through a climate-controlled zone containing air with a relative humidity of 40 to 95% and a temperature of 50 to 70°C, subsequently
f. Passage of the hollow fibre through an aqueous coagulation medium conditioned to 50 to 80°C to complete the formation of the membrane structure and to fix the membrane structure,
g. Extraction of the hollow-fibre membrane formed in this way to remove the solvent system and soluble substances,
h. Drying of the hollow-fibre membrane.

**18.** Method according to Claim 17, **characterised in that** the hydrophobic aromatic sulfone polymer is a polysulfone or polyether sulfone.

**19.** Method according to one or both of Claims 17 and 18, **characterised in that** the at least one hydrophilic polymer comprises a polyvinylpyrrolidone or a polyethylene glycol.

**20.** Method according to one or more of Claims 17 to 19, **characterised in that** the at least one hydrophilic polymer comprises a polyvinylpyrrolidone or a polyethylene glycol and a hydrophilically modified aromatic sulfone polymer.

**21.** Method according to one or more of Claims 17 to 20, **characterised in that** the solvent system contains ε-caprolactam as a solvent.

**22.** Method according to Claim 21, **characterised in that** the solvent system contains 35 to 50 wt.% ε-caprolactam referred to the weight of the solvent system, 35 to 50 wt.% γ-butyrolactone referred to the weight of the solvent system, and 0 to 10 wt.% of a non-solvent for the polymer component, referred to the weight of the solvent system.

**23.** Method according to Claim 21 or 22, **characterised in that** a mixture of glycerine and ε-caprolactam is employed as the interior filler.

**24.** Method according to one or more of Claims 17 to 23, **characterised in that** the air contained in the climate-controlled zone has a relative humidity of 55 to 85%.

**25.** Method according to one or more of Claims 17 to 24, **characterised in that** the air contained in the climate-controlled zone flows through the climate-controlled zone with a velocity of less than 0.5 m/s.

**26.** Method according to one or more of Claims 17 to 25, **characterised in that** the aqueous coagulation medium is conditioned to 60 to 75°C.

## Revendications

**1.** Membrane en fibres creuses pour ultrafiltration, hydrophile, semi-perméable, asymétrique et d'un seul tenant, constituée d'un polymère de sulfone aromatique et hydrophobe et d'au moins un polymère hydrophile, présentant une surface interne tournée vers sa lumière et une surface externe tournée vers l'extérieur, ainsi qu'une paroi située entre ces surfaces et dotée d'une épaisseur de paroi, laquelle membrane en fibres creuses comporte dans sa paroi une couche séparatrice à pores ouverts jouxtant la surface interne, à laquelle couche séparatrice fait suite, en direction de la surface externe, une couche de soutien dotée d'une structure de pores asymétrique et spongieuse, sans pores digitaliformes, laquelle couche de soutien est limitée, du côté de la surface externe, par une couche externe,
laquelle membrane est **caractérisée en ce que** :

a) la couche séparatrice présente un seuil de coupure situé dans l'intervalle allant de 20 000 à 200 000 daltons et une épaisseur représentant au plus 10 % de l'épaisseur de la paroi, et la structure de pores dans la zone de la couche séparatrice est pratiquement isotrope ;
b) au sein de la couche de soutien, la taille des pores commence, à partir de la couche séparatrice, par augmenter jusqu'à une zone où la taille des pores est maximale, puis diminue après cette zone en direction de la surface externe ;
c) la couche externe présente une épaisseur représentant de 10 à 30 % de l'épaisseur de la paroi, la structure de pores dans la zone de la couche externe est pratiquement isotrope, et la taille moyenne des pores de la couche externe est supérieure à la taille moyenne des pores de la couche séparatrice, mais inférieure à la taille moyenne des pores de la couche de soutien ;
d) l'épaisseur de la paroi vaut de 100 à 450 $\mu$m ;
e) et la membrane en fibres creuses présente un flux transmembranaire pour l'eau d'au moins 0,5 mL/(cm$^2$.min.bar) et une résistance à la rupture $\sigma_B$, soit une force de rupture $F_R$ rapportée à l'aire de section transversale $A_{ST}$, d'au moins 300 cN/mm$^2$.

**2.** Membrane en fibres creuses selon la revendication 1, **caractérisée en ce que** la zone où la taille des pores est maximale se trouve à une distance de la surface interne qui vaut de 15 à 40 % de l'épaisseur de la paroi.

**3.** Membrane en fibres creuses selon l'une des revendications 1 et 2 ou aux deux, **caractérisée en ce que**, dans la zone où la taille des pores est maximale, la taille des pores les plus grands vaut de 5 à 15 $\mu$m.

**4.** Membrane en fibres creuses selon l'une ou plusieurs des revendications 1 à 3, **caractérisée en ce qu'**elle présente un flux transmembranaire pour l'eau d'au plus 2,0 mL/(cm$^2$.min.bar).

**5.** Membrane en fibres creuses selon l'une ou plusieurs des revendications 1 à 4, **caractérisée en ce que** le produit Ftm.$F_R$ du flux transmenbranaire Ftm pour l'eau et de la force de rupture $F_R$ de la membrane en fibres creuses est supérieur à 400 cN.mL/(cm$^2$.min.bar).

**6.** Membrane en fibres creuses selon la revendication 5, **caractérisée en ce que** le produit Ftm.$F_R$ est supérieur à 500 cN.mL/(cm$^2$.min.bar).

**7.** Membrane en fibres creuses selon l'une ou plusieurs des revendications 1 à 6, **caractérisée en ce qu'**elle présente une résistance à la rupture $\sigma_B$, soit une force de rupture $F_R$ rapportée à l'aire de section transversale $A_{ST}$, d'au moins 500 cN/mm$^2$.

**8.** Membrane en fibres creuses selon la revendication 7, **caractérisée en ce qu'**elle présente une résistance à la rupture $\sigma_B$ d'au moins 700 cN/mm$^2$.

**9.** Membrane en fibres creuses selon l'une ou plusieurs des revendications 1 à 8, **caractérisée en ce que** la couche

séparatrice présente un seuil de coupure situé dans l'intervalle allant de 50 000 à 150 000 daltons.

**10.** Membrane en fibres creuses selon l'une ou plusieurs des revendications 1 à 9, **caractérisée en ce que** l'épaisseur de la paroi vaut de 150 à 350 μm.

**11.** Membrane en fibres creuses selon l'une ou plusieurs des revendications 1 à 10, **caractérisée en ce que** le polymère de sul-fone aromatique et hydrophobe est une polysulfone ou un poly(éther sulfone).

**12.** Membrane en fibres creuses selon l'une ou plusieurs des revendications 1 à 11, **caractérisée en ce que** l'autre polymère hydrophile au nombre d'au moins un présente une masse molaire moyenne $M_w$ de plus de 10 000 daltons.

**13.** Membrane en fibres creuses selon l'une ou plusieurs des revendications 1 à 12, **caractérisée en ce que** le polymère hydro-phile au nombre d'au moins un comprend une poly(vinyl-pyrrolidone) ou un polyéthylèneglycol.

**14.** Membrane en fibres creuses selon l'une ou plusieurs des revendications 1 à 12, **caractérisée en ce que** le polymère hydro-phile au nombre d'au moins un comprend une poly(vinyl-pyrrolidone) ou un polyéthylèneglycol, ainsi qu'un polymère de sulfone aromatique, modifié de manière à être hydrophile.

**15.** Membrane en fibres creuses selon la revendication 14, **caractérisée en ce que** le polymère de sulfone aromatique modifié de manière à être hydrophile est un polymère de sulfone aromatique sulfoné.

**16.** Membrane en fibres creuses selon l'une ou plusieurs des revendications 1 à 15, **caractérisée en ce qu'**elle présente un degré de porosité de 70 à 85 % en volume.

**17.** Procédé de fabrication d'une membrane en fibres creuses conforme à la revendication 1, comportant les étapes suivantes :

a) préparer une solution à filer homogène, à partir d'un composant polymère et d'un système solvant, lequel composant polymère comprend de 17 à 27 %, en poids rapporté au poids de la solution, d'un polymère de sulfone aromatique et hydrophobe, et de 10 à 30 %, en poids rapporté au poids de la solution, d'au moins un autre polymère hydrophile, et lequel système solvant comprend de 5 à 80 %, en poids rapporté au poids du système solvant, d'un solvant du composant polymère, de 0 à 80 %, en poids rapporté au poids du système solvant, d'un solvant latent du composant polymère, et de 0 à 70 %, en poids rapporté au poids du système solvant, d'un non-solvant du composant polymère ;
b) extruder cette solution à filer homogène en la faisant passer dans la fente annulaire d'une filière à fibres creuses, pour en faire une fibre creuse ;
c) extruder un remplissage intérieur en le faisant passer dans l'orifice central de la filière à fibres creuses, lequel remplissage intérieur comprend un mélange d'un solvant et d'un non-solvant du polymère de sulfone ;
d) amener le remplissage intérieur en contact avec la face interne de la fibre creuse, pour amorcer la coagulation à l'intérieur de la fibre creuse et pour former une couche séparatrice au niveau de la face interne de la fibre creuse ;
e) faire passer la fibre creuse, après sa sortie de la filière à fibres creuses et durant un laps de temps de 0,5 à 10 secondes, dans une zone à atmosphère climatisée, contenant de l'air qui présente un taux d'humidité relative de 40 à 95 % et une température de 50 à 70 °C ;
f) faire ensuite passer la fibre creuse dans un bain aqueux de coagulation, régulé à une température de 50 à 80 °C, pour compléter la formation de la structure de la membrane et fixer cette structure ;
g) soumettre la membrane en fibres creuses ainsi formée à une opération d'extraction, pour en éliminer le système solvant et les matières solubles ;
h) et faire sécher la membrane en fibres creuses.

**18.** Procédé selon la revendication 17, **caractérisé en ce que** le polymère de sulfone aromatique et hydrophobe est une poly-sulfone ou un poly(éther sulfone).

**19.** Procédé selon la revendication 17 ou 18, **caractérisé en ce que** le polymère hydrophile au nombre d'au moins un comprend une poly(vinyl-pyrrolidone) ou un polyéthylèneglycol.

**20.** Procédé selon l'une ou plusieurs des revendications 17 à 19, **caractérisé en ce que** le polymère hydrophile au nombre d'au moins un comprend une poly(vinyl-pyrrolidone) ou un polyéthylène-glycol, ainsi qu'un polymère de sulfone aromatique, modifié de manière à être hydrophile.

**21.** Procédé selon l'une ou plusieurs des revendications 17 à 20, **caractérisé en ce que** le système solvant comprend, en tant que solvant, de l'ε-caprolactame.

**22.** Procédé selon la revendication 21, **caractérisé en ce que** le système solvant comprend de 35 à 50 %, en poids rapporté au poids du système solvant, d'ε-caprolactame, de 35 à 50 %, en poids rapporté au poids du système solvant, de γ-butyrolactone, et de 0 à 10 %, en poids rapporté au poids du système solvant, d'un non-solvant du composant polymère.

**23.** Procédé selon la revendication 21 ou 22, **caractérisé en ce que** l'on utilise en tant que remplissage intérieur un mélange de glycérol et d'ε-caprolactame.

**24.** Procédé conforme à l'une ou plusieurs des revendications 17 à 23, **caractérisé en ce que** l'air contenu dans la zone à atmosphère climatisée présente un taux d'humidité relative de 55 à 85 %.

**25.** Procédé conforme à l'une ou plusieurs des revendications 17 à 24, **caractérisé en ce que** l'air contenu dans la zone à atmosphère climatisée traverse cette zone en un courant dont la vitesse est inférieure à 0,5 m/s.

**26.** Procédé conforme à l'une ou plusieurs des revendications 17 à 25, **caractérisé en ce que** le bain aqueux de coagulation est régulé à une température de 60 à 75 °C.

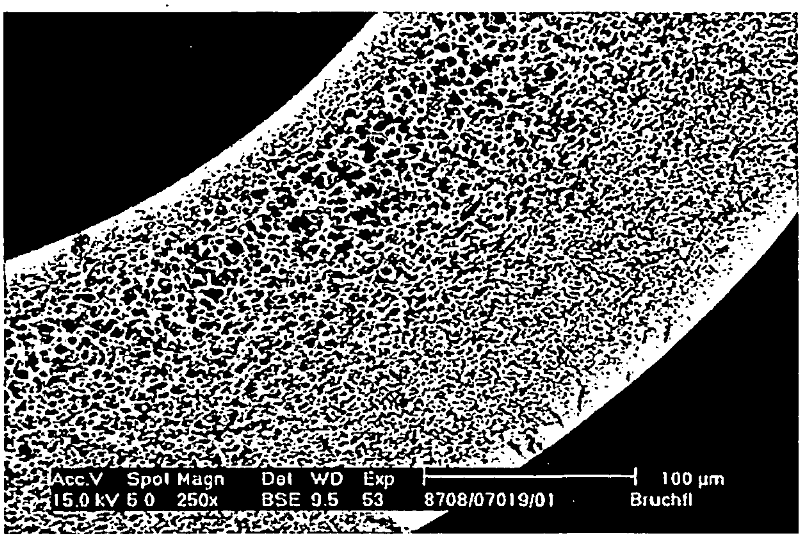
Acc.V Spot Magn Det WD Exp 100 µm
15.0 kV 5.0 250x BSE 9.5 53 8708/07019/01 Bruchfl

Fig. 1

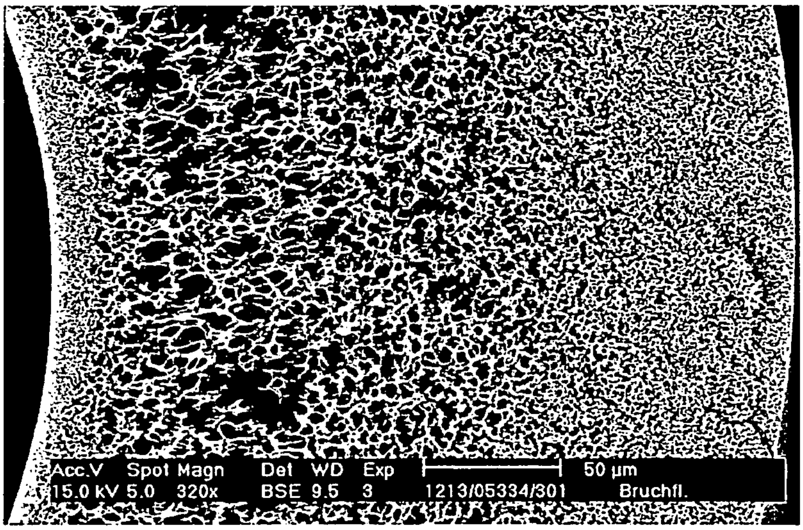
Acc.V Spot Magn Det WD Exp 50 µm
15.0 kV 5.0 320x BSE 9.5 3 1213/05334/301 Bruchfl.

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0361085 B1
- US 5928774 A
- US 5886059 A
- EP 568045 A
- EP 828553 A
- US 4933081 A
- US 5049276 A